# EUROPÄISCHE PATENTSCHRIFT

(11) **EP 0 946 670 B1**
(45) Veröffentlichungstag und Bekanntmachung des Hinweises auf die Patenterteilung: **17.10.2001**
(21) Anmeldenummer: 97912133.2
(22) Anmeldetag: 08.10.1997
(51) Int. Cl.: C09K 19/00, C09K 19/38, C09D 5/36

(54) **EINGEFÄRBTE CHOLESTERISCHE FLÜSSIGKRISTALLPOLYMERE MIT OPTISCH VARIABLEN EIGENSCHAFTEN**
COLORED CHOLESTERIC LIQUID CRYSTAL POLYMERS WITH OPTICALLY VARIABLE PROPERTIES
POLYMERES A CRISTAUX LIQUIDES CHOLESTERIQUES TEINTES PRESENTANT DES PROPRIETES OPTIQUEMENT VARIABLES

(30) Priorität: 21.10.1996 DE 19643277
(43) Veröffentlichungstag der Anmeldung: 06.10.1999
(73) Patentinhaber: Clariant GmbH, 65929 Frankfurt am Main (DE)
(72) Erfinder: SCHÖNFELD, Axel, D-65207 Wiesbaden (DE); DIETZ, Erwin, D-61462 Königstein (DE); DEWALD, Bernd, D-65510 Idstein (DE)
(86) Internationale Anmeldenummer: EP9705512
(87) Internationale Veröffentlichungsnummer: WO9817741

(56) Entgegenhaltungen:
- WO-A-95/29961
- DE-A- 4 240 743
- DE-A- 4 418 490
- EBERLE H -J ET AL: "INVERSE ANGLE DEPENDENCE OF THE REFLECTION COLOURS OF CHOLESTERIC POLYMERIC LIQUID CRYSTALS MIXED WITH PIGMENTS" LIQUID CRYSTALS, Bd. 5, Nr. 3, 1.Januar 1989, Seiten 907-916, XP000124433 in der Anmeldung erwähnt

## Beschreibung

Die Erfindung betrifft eingefärbte cholesterische Flüssigkristallpolymere (cLCPs), ein Verfahren zu ihrer Herstellung sowie deren Verwendung.

Cholesterische Hauptkettenpolymere sind bekannt und können analog nematischer Hauptkettenpolymere hergestellt werden, indem ein zusätzliches chirales Comonomer verwendet wird (US-A-4,412,059; EP-A-0 196 785; EP-A-0 608 991; EP-A-0 391 368) oder indem nematische Hauptkettenpolymere (LCP) mit zusätzlichen chiralen Comonomeren umgesetzt werden (EP-A-0 283 273). Cholesterische Hauptkettenpolymere zeichnen sich durch ihre helikale Überstruktur aus. Diese führt zum einen dazu, daß das Material nicht mehr die bei nematischen Flüssigkristallpolymeren übliche Anisotropie der mechanischen Eigenschaften aufweist. Je nach Gehalt an chiralem Monomer zeigt das Material ausgeprägte Farbeffekte, die auf der selektiven Reflexion an der helikalen Überstruktur beruhen. Die genaue Reflexionsfarbe hängt hierbei vom Betrachtungswinkel und vor allem von der Ganghöhe der Helix ab. Für jeden beliebigen Betrachtungswinkel - zum Beispiel senkrechte Aufsicht auf einen Probekörper - erscheint als Reflexionsfarbe eine Farbe mit einer Wellenlänge, die der Ganghöhe der helikalen Überstruktur entspricht. Dies bedeutet, daß das reflektierte Licht eine umso kürzere Wellenlänge hat, je kleiner die Ganghöhe der Helix ist. Die sich ausbildende Ganghöhe der Helix hängt im wesentlichen von dem Anteil des chiralen Comonomers, der Art des Einbaus in das Polymer, dem Polymerisationsgrad und der Struktur des chiralen Comonomers ab. Außerdem zeigen viele Systeme noch eine Temperaturabhängigkeit der Ganghöhe in der cholesterischen Phase.

Die Farbe der cholesterischen Flüssigkristalle beruht auf einer selektiven Reflexion. Sie ist also von grundsätzlich anderer Natur als die Farbgebung von klassischen Pigmenten, deren Farbe auf Lichtabsorption beruht (Absorptionspigmente).

Um bei dünnen Schichten cholesterischer Flüssigkristalle zu ausgeprägten Farbeffekten zu gelangen, ist in der Regel ein absorbierender, insbesondere schwarzer Untergrund notwendig, da ansonsten aufgrund eines nicht hinreichend ausgeprägten Deckvermögens der cholesterischen Flüssigkristalle der nicht selektive Teil des Lichts am Untergrund reflektiert wird, was den Farbeindruck schwächt. Es ist ferner bekannt (H. J. Eberle, Liquid Crystals, 1989, Vol. 5, No. 3, Seite 907 - 916), daß anstelle eines schwarzen Untergrunds auch anders eingefärbte Untergründe verwendet werden können. Das farbige Lackieren des Untergrundes ist jedoch mit Nachteilen behaftet. Zum einen ist dies ein zusätzlicher Prozeßschritt, der zusätzliche Kosten verursacht, und zum anderen wird der Farbeffekt nun von der Dicke der darüber aufgebrachten Flüssigkristallschicht abhängig, da diese das Verhältnis von Absorptionspigment zu Flüssigkristall-Pigment bestimmt. Außerdem zeigen auf diese Weise erzeugte Lacke nicht die geforderte einfache Reparaturfähigkeit.

Aufgabe der vorliegenden Erfindung ist es, die im Stand der Technik aufgeführten Nachteile zu umgehen und ein Material zur Verfügung zu stellen, welches vom Betrachtungswinkel abhängige Farben aufweist, egale Färbungen ohne farbliche Inhomogenitäten ergibt und eine hohe Temperaturstabilität und eine hohe Chemikalienresistenz (Unlöslichkeit) aufweist.

Es wurde gefunden, daß sich die im Stand der Technik aufgeführten Nachteile überraschenderweise durch cholesterische flüssigkristalline Polymere, die mit einem Farbmittel eingefärbt sind, umgehen lassen und daß auf einfache Weise neuartige Materialien bereitgestellt werden.

Gegenstand der vorbiegenden Erfindung ist eine Farbmittelzusammensetzung, bestehend aus 0,01 bis 60 Gew.-% eines Farbmittels aus der Gruppe der Anthanthron-, Anthrachinon-, Dioxazin-, Phthalocyanin-, Chinacridon-, Diketopyrrolopyrrol-, Perylen-, Perinon-, Azomethin-, Isoindolin- und Azo-Pigmente, der Chinophthalon-, Perinon-, Anthrachinon-, Azomethinkomplex-, Azlacton- und Azo-Farbstoffen;
40 bis 99,99 Gew.-% eines cholesterischen flüssigkristallinen Hauptkettenpolymers, bestehend aus 0 bis 99,8 Mol% einer oder mehrerer Verbindungen aus der Gruppe der aromatischen Hydroxycarbonsäuren, cycloaliphatischen Hydroxycarbonsäuren und aromatischen Aminocarbonsäuren;
0 bis 50 Mol% einer oder mehrerer Verbindungen aus der Gruppe der aromatischen Dicarbonsäuren und cycloaliphatischen Dicarbonsäuren;
0 bis 50 Mol% einer oder mehrerer Verbindungen aus der Gruppe der aromatischen und cycloaliphatischen Diole und Diamine; und 0,1 bis 40 Mol%, an chiralen, bifunktionellen Comonomeren; wobei die Summe 100 Mol% ergibt; und
0 bis 10 Gew.-% an üblichen Hilfsstoffen und Additiven.

Ein mit besagtem Farbmittel eingefärbtes cholesterisches flüssigkristallines Polymer weist im nicht orientierten Zustand die Farbe des Farbmittels auf. Orientiert man eine solche Probe in der cholesterischen Phase, so kann man die brillante Coloristik der Selektivreflexion beobachten. Diese unterscheidet sich überraschenderweise von der der cholesterischen Polymeren dadurch, daß die Farbtöne durch die Absorption der Farbmittel moduliert werden. Dies bedeutet, daß ein Polymer, welches beispielsweise ein rotes Farbmittel enthält, in der cholesterischen Phase anstelle einer beispielsweise goldgelben Coloristik eine rotgoldene Coloristik aufweist. Auch erscheint die Winkelabhängigkeit der cholesterischen Reflexionsfarben durch die Modulation mit der Absorptionsfarbe in neuer Weise. So zeigt ein cholesterisches flüssigkristallines Polymer mit der besagten rotgoldenen Coloristik bei schrägem Anblick eine rotstichig grüne Coloristik.

Bevorzugt im Sinne der vorliegenden Erfindung sind cholesterische flüssigkristalline Hauptkettenpolymere, bestehend aus
a) 0 bis 99,8 Mol% einer oder mehrerer Verbindungen aus der Gruppe der aromatischen Hydroxycarbonsäuren, cycloaliphatischen Hydroxycarbonsäuren und aromatischen Aminocarbonsäuren;
b) 0 bis 50 Mol% einer oder mehrerer Verbindungen aus der Gruppe der aromatischen Dicarbonsäuren und cycloaliphatischen Dicarbonsäuren;
c) 0 bis 50 Mol% einer oder mehrerer Verbindungen aus der Gruppe der aromatischen und cycloaliphatischen Diole und Diamine; und
d) 1 bis 25 Mol% an chiralen, bifunktionellen Comonomeren;
wobei die Summe 100 Mol% ergibt.

Bei den angegebenen Prozentsätzen ist darauf zu achten, daß die dem Fachmann bekannte Stöchiometrie der funktionellen Gruppen zur Polykondensation gewährleistet ist. Zusätzlich können die Polymere noch Komponenten mit nur einer funktionellen Gruppe oder mit mehr als zwei funktionellen Gruppen, wie beispielsweise Dihydroxybenzoesäure, Trihydroxybenzole oder Trimellitsäure enthalten. Auf diese Weise kann Einfluß auf das Molekulargewicht der Polymeren genommen werden. Die Komponenten mit mehr als zwei funktionellen Gruppen wirken als Verzweigungsstelle im Polymer und dürfen nur in geringen Konzentrationen, beispielsweise 0 bis 5 Mol-%, zugegeben werden, wenn eine Vernetzung des Materials während der Kondensation vermieden werden soll.

Besonders bevorzugt sind cholesterische Hauptgruppenpolymere, die aus folgenden Bausteinen der einzelnen Monomergruppen aufgebaut sind:
a) Aromatische Hydroxycarbonsäuren, Aminocarbonsäuren: Hydroxybenzoesäuren, Hydroxynaphthalincarbonsäuren, Hydroxybiphenylcarbonsäuren, Aminobenzoesäuren, Hydroxyzimtsäuren
b) Aromatische Dicarbonsäuren, aliphatische Dicarbonsäuren: Terephthalsäure, Isophthalsäure, Biphenyldicarbonsäuren, Naphthalindicarbonsäuren, Cyclohexandicarbonsäuren, Pyridindicarbonsäuren, Diphenyletherdicarbonsäuren, Carboxyzimtsäuren sowie 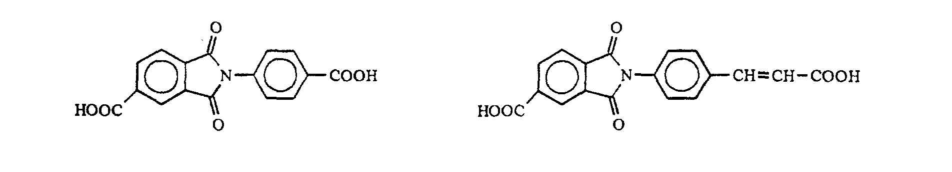
c) Aromatische Diole, Aminophenole, Diamine: Hydrochinone, Dihydroxybiphenyle, Tetramethyldihydroxybiphenyle, Naphthalindiole, Dihydroxydiphenylsulfone, Dihydroxydiphenylether, Dihydroxyterphenyle, Dihydroxydiphenylketone, Phenylendiamine, Diaminoanthrachinone, Dihydroxyanthrachinone sowie 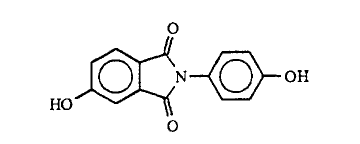
d) Chirale, bifunktionelle Monomere: Isosorbid, Isomannid, Isoidid, Camphersäure, (D)- oder (L)-Methylpiperazin, (D)- oder (L)- 3-Methyladipinsäure, Butan-2,3-diol sowie 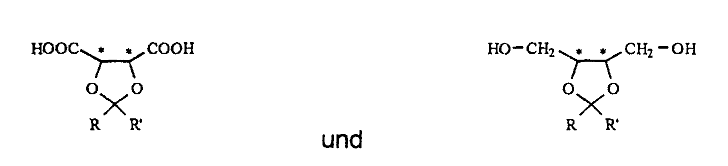
wobei R und R' jeweils unabhängig voneinander H, C₁-C₆-Alkyl oder Phenyl, vorzugsweise H oder CH₃, sind.

Die beschriebenen Polymerbausteine können noch weitere Substituenten, wie beispielsweise Methyl, Methoxy, Cyano oder Halogen, enthalten.

Ganz besonders bevorzugt im Sinne der vorliegenden Erfindung sind Polymere, enthaltend ein oder mehrere Monomere aus der Gruppe p-Hydroxybenzoesäure, 2-Hydroxy-6-naphthoesäure, Terephthalsäure, Isophthalsäure, 2,6-Naphthalindicarbonsäure, Hydrochinon, Resorcin und 4,4'-Dihydroxybiphenyl; sowie Camphersäure, Isosorbid und/oder Isomannid als chirale Komponente.

Die der erfindungsgemäßen Farbmittelzusammensetzung zugrundeliegenden Farbmittel können anorganische oder organische Pigmente sein. Als anorganische Pigmente seien beispielsweise genannt: Titandioxid, Eisenoxide, Metalloxid-Mischphasenpigmente, Cadmiumsulfide, Ultramarinblau- oder Chromat-Molybdat-Pigmente. Als organische Pigmente können alle dem Fachmann aus der einschlägigen Literatur, z.B. W. Herbst, K. Hunger, Industrielle Organische Pigmente, VCH Verlag, 1987, hinlänglich bekannten Pigmente eingesetzt werden, z.B. Ruß-, Anthanthron-, Anthrachinon-, Dioxazin-, Phthalocyanin-, Chinacridon-, Diketopyrrolopyrrol-, Perylen-, Perinon-, Azomethin-, Isoindolin- oder Azopigmente.

Die der erfindungsgemäßen Farbmittelzusammensetzung zugrundeliegenden Farbmittel können auch Farbstoffe sein, die vollständig oder teilweise in dem cholesterischen Flüssigkristallpolymer gelöst sind. Die Verwendung solcher Farbstoffe kann vorteilhaft sein, da sich diese normalerweise in das cholesterische Flüssigkristallpolymer leichter einarbeiten lassen und brillantere Farbtöne ergeben. Geeignete Farbstoffe im Sinne der vorliegenden Erfindung sind beispielsweise Chinophthalon-, Perinon-, Anthrachinon-, Azomethinkomplex-, Azlacton- und Azofarbstoffe.

Um spezielle coloristische Effekte zu erzielen, können als Farbmittel für die erfindungsgemäße Farbmittelzusammensetzung auch Mischungen verschiedener Pigmente oder Farbstoffe oder Mischungen von Farbstoffen mit Pigmenten eingesetzt werden.

Die Mengenverhältnisse zwischen dem cholesterischen flüssigkristallinen Polymer und dem Farbmittel können in weiten Grenzen schwanken und sind abhängig von der Art des Farbmittels und dem jeweils gewünschten Farbeffekt. Im allgemeinen besteht die erfindungsgemäße Farbmittelzusammensetzung aus 0,01 bis 60 Gew.-%, vorzugsweise 0,1 bis 10 Gew.-%, an Farbmittel und 40 bis 99,99 Gew.-%, vorzugsweise 90 bis 99,99 Gew.-%, an cholesterischem flüssigkristallinen Polymer. Weiterhin können 0 bis 10 Gew.-%, vorzugsweise 0 bis 5 Gew.-%, bezogen auf das Gesamtgewicht, an üblichen Hilfsstoffen und Additiven aus der Gruppe der nichtionogenen, anionischen oder kationischen Tenside, synthetischen und/oder natürlichen Wachse, synthetischen und/oder natürlichen Fettsäuren oder Fettsäureestern, Stabilisatoren (z.B. UV- oder Wärmestabilisatoren, Antioxidantien), Antistatika und optischen Aufheller in der erfindungsgemäßen Farbmittelzusammensetzung enthalten sein. Liegen die Farbmittelkonzentrationen oberhalb von etwa 20 Gew.-%, so liegt in der Regel ein Masterbatch vor, der ebenfalls, wie nachstehend beschrieben, Gegenstand der Erfindung ist.

Gegenstand der vorliegenden Erfindung ist auch ein Verfahren zur Herstellung der erfindungsgemäßen Farbmittelzusammensetzung, dadurch gekennzeichnet, daß man eine Schmelze des cholesterischen flüssigkristallinen Polymers mit dem Farbmittel und gegebenenfalls den Hilfsstoffen und Additiven vermischt, bis eine homogene Verteilung vorliegt. Das Vermischen kann mit allen dafür geeigneten Mischaggregaten, wie beispielsweise Dispersionsknetern, ®Banbury-Knetern oder Schneckenknetern, oder durch Extrusion, beispielsweise in einem Ein- oder Zweischneckenextruder, erfolgen.

In einer weiteren Ausführungsform kann das Farbmittel auch direkt während der Herstellung des cholesterischen flüssigkristallinen Polymers, zweckmäßigerweise gegen Ende der Polykondensationsreaktion, vorzugsweise unmittelbar vor dem Austrag des fertigen Polymers, zugegeben werden.

Auch ist es möglich, das Farbmittel in Form eines Masterbatchs in das cholesterische Flüssigkristallpolymer einzuarbeiten. Als Träger für einen Masterbatch können synthetische und natürliche Wachse, Polymere und Kautschuke eingesetzt werden. Bevorzugter Träger für einen Masterbatch ist jedoch das cholesterische Flüssigkristallpolymer selbst. Der Masterbatch kann ein Pigment oder einen Farbstoff oder auch eine Mischung verschiedener Pigmente und/oder Farbstoffe enthalten. Auch können in den Masterbatch weitere Hilfsstoffe und/oder Additive eingearbeitet werden. Die Herstellung solcher Masterbatchs kann nach allen bekannten Verfahren durchgeführt werden, beispielsweise durch inniges Vermischen der Farbmittel mit dem Träger in der Schmelze in geeigneten Mischaggregaten, beispielsweise Dispersionskneter, Banbury-Kneter oder Schneckenkneter, z.B. Zweischneckenkneter. Die Einfärbung des cholesterischen flüssigkristallinen Polymeren mit dem Masterbatch kann durch Mischen der beiden Materialien und anschließendem Extrudieren erfolgen. Auch kann der Masterbatch als Schmelze in die Schmelze des cholesterischen Flüssigkristallpolymeren über einen Seitenextruder und/oder einer Schmelzpumpe zudosiert werden. Am wirtschaftlichsten erfolgt dies beim Austrag des cholesterischen flüssigkristallinen Polymers aus dem Reaktor nach der Polykondensation.

Die nach den vorstehend beschriebenen Verfahren hergestellten eingefärbten flüssigkristallinen Polymere liegen normalerweise als physikalische Mischung aus Farbmittel und Polymer vor. Da bei dem Herstellungsverfahren in der Regel bei höheren Temperaturen gearbeitet wird, kann es nicht ausgeschlossen werden, daß insbesondere im Falle von Farbstoffen mit funktionellen Gruppen wie Carboxyl, Sulfo oder Hydroxyl zumindest teilweise eine chemische Bindung an das cholesterische flüssigkristalline Polymer stattfindet.

Die Herstellung der cholesterischen flüssigkristallinen Polymere kann dadurch erfolgen, daß die dem besagten Polymer zugrundeliegenden monomeren Verbindungen als solche oder in Form eines reaktiven Derivats in der Schmelze, in Lösung oder in emulgierter oder disperser Phase kondensiert werden.

Die erfindungsgemäß eingesetzten Monomere können entweder direkt eingesetzt werden, oder es können auch zweckmäßige Vorstufen verwendet werden, die sich unter den nachfolgenden Reaktionsbedingungen zu den gewünschten Monomeren umsetzen. So kann beispielsweise statt N-(4-Hydroxyphenyl)trimellitimid Aminophenol und Trimellitsäureanhydrid eingesetzt werden.

Die Polykondensation kann nach allen üblichen Methoden durchgeführt werden. Beispielsweise eignet sich die Schmelzkondensation mit Acetanhydrid, die beispielsweise in EP-A-0 391 368 beschrieben ist. Die Kondensation mit Acetanhydrid ist auch in Lösung oder in disperser oder emulgierter Phase möglich.

Bevorzugt erfolgt die Verknüpfung der Monomere über Esterbindungen (Polyester), Amidbindungen (Polyesteramid/Polyamid) und/oder über Imidbindungen (Polyesterimid/Polyimid), jedoch kann die Verknüpfung auch über andere bekannte Verknüpfungsarten erfolgen.

Anstelle der Carbonsäuren können auch Carbonsäurederivate, wie beispielsweise Säurechloride oder Carbonsäureester, eingesetzt werden. Anstelle der Hydroxykomponenten können auch entsprechende Hydoxyderivate, wie beispielsweise die acetylierten Hydroxyverbindungen, eingesetzt werden.

Die erfindungsgemäß eingesetzten Polymere können auch vernetzbare Gruppen enthalten, so daß es möglich ist, ein orientiertes Flüssigkristallpolymer durch beispielsweise eine Photovernetzung zu fixieren. Vernetzte cLCPs können außerdem erhalten werden, indem man niedermolekulare Precurser mit mindestens drei funktionellen Gruppen oder mit mindestens zwei polymerisierbaren Doppelbindungen direkt vernetzt.

In einer bevorzugten Ausführungsform weisen die cLCPs eine sehr geringe Löslichkeit auf, so daß ihre Molekulargewichte nicht mit kommerziell üblichen Methoden (GPC, Lichtstreuung) bestimmt werden können. Als Maß für das Molekulargewicht kann die intrinsische Viskosität der Polymere in einer Lösung aus Pentafluorphenol/Hexafluorisopropanol herangezogen werden. Bevorzugt sind Polymere mit einer intrinsischen Viskosität zwischen 0,1 dl/g und 10 dl/g.

Die erfindungsgemäß eingesetzten Polymere können direkt eingesetzt werden. Es ist jedoch auch möglich, Blends aus den erfindungsgemäß eingesetzten Polymeren herzustellen. Die Blends können aus verschiedenen Polymeren bestehen, es ist jedoch auch möglich, die Polymere mit anderen cholesterischen oder nematischen Polymeren zu mischen.

Die erfindungsgemäßen Farbmittelzusammensetzungen können als Werkstoff weiterverarbeitet werden. Ein Werkstoff ist ein geformtes Gebilde wie beispielsweise Spritzgußartikel, extrudierte Profile oder Rohre, Bändchen, Folien oder Fasern.

Die erfindungsgemäßen Farbmittelzusammensetzungen können auch in Komponenten für berührungslose Druckverfahren eingesetzt werden, beispielsweise in elektrophotographischen Tonern und Entwicklern und in Ink-Jet-Tinten.

Insbesondere eignen sich die erfindungsgemäßen Farbmittelzusammensetzungen als Basismaterial zur Herstellung von Effektbeschichtungen aller Art, wie z. B. Pulvereffektbeschichtungen, sowie zur Herstellung von insbesondere plättchenförmigen Effektpigmenten, die sich durch einen vom farbigen Comonomer und vom Blickwinkel abhängigen Farbeffekt und - insbesondere im Falle von Pigmenten als Farbmittel - ein erhöhtes Deckungsvermögen auszeichnen.

Pulvereffektbeschichtungen lassen sich nach folgenden bevorzugten Methoden applizieren:
Ein feinteiliges Pulver der erfindungsgemäßen Farbmittelzusammensetzung wird beim Versprühprozess elektrostatisch aufgeladen. Dies geschieht beim Corona-Verfahren durch Vorbeiführen des Pulvers an einer geladenen Corona. Dabei wird das Pulver selbst aufgeladen. Beim triboelektrischen bzw. elektrokinetischen Verfahren wird vom Prinzip der Reibungselektrizität Gebrauch gemacht. Das Pulver erhält im Sprühgerät eine elektrostatische Aufladung, die der Ladung des Reibungspartners, im allgemeinen ein Schlauch oder ein Sprührohr (beispielsweise aus Polytetrafluorethylen), entgegengesetzt ist. Die elektrostatische Aufladung führt zu einem hohen Abscheidegrad des Pulvers auf dem zu beschichtenden Gegenstand. Nach dem Auftragprozess auf das Objekt wird die Pulverschicht auf Temperaturen oberhalb des Erweichungspunktes des Pulvers erhitzt, bei welchen die Polymere einen homogenen Film bilden und die helikalen Überstrukturen ausbilden. Die Temperatur, bei welcher die Ausbildung der helikalen Struktur beginnt, wird im folgenden als Chiralisierungstemperatur bezeichnet.

Die speziellen optischen Eigenschaften einer Pulvereffektbeschichtung werden erst beobachtet, wenn die Moleküle oberhalb der Chiralisierungstemperatur des Polymeren die helikale Struktur ausbilden. Der Übergang in die cholesterische Phase erfolgt in vielen Fällen bereits bei der Synthese der Polymeren. Die Wellenlänge der Selektivreflexion der erfindungsgemäß eingesetzten cLCPs wird durch die Ganghöhe der helikalen Struktur bestimmt. Die Ganghöhe ist abhängig von der Struktur des Polymeren, der Schmelzviskosität, der Gegenwart von Lösemitteln und insbesondere von der Verdrillungskraft des chiralen Monomers ("helical twisting power"). Sie ist außerdem eine Funktion der Temperatur. Entsprechend läßt sich die Ganghöhe der Helix auch über die Temperatur einstellen. Durch schnelles Abkühlen der beschichteten Substrate läßt sich die Ganghöhe der Helix und somit die Selektivreflexion dauerhaft einfrieren. Beim langsamen Abkühlen muß mit coloristischen Veränderungen gerechnet werden. Im allgemeinen werden auch auf diese Weise gefärbte Substrate erhalten. Es ist jedoch schwierig, die Endcoloristik vorherzubestimmen. Wird das abgekühlte Substrat erneut erhitzt, so lassen sich neue oder auch wieder die gleichen Ganghöhen der Helix und somit die Wellenlänge der Selektivreflexion einstellen. Durch diesen Vorgang kann die Coloristik des beschichteten Substrats auf einfache Weise variiert und korrigiert werden. Für die Anwendung in der Praxis ist es wichtig, daß der Schmelzpunkt und die Chiralisierungstemperatur des Polymeren oberhalb der Gebrauchstemperatur des beschichteten Substrats liegen.

Begünstigt werden kann die Ausbildung der helikalen Struktur durch die Temperatur, die Einwirkung von Scherkräften und durch Untergründe mit polymeren Schichten, wie beispielsweise Polyvinylalkohol, Cellulosederivate und Polyimide. Der Orientierungsprozess der Polymermoleküle kann je nach Struktur der Polymeren auch durch elektrische und magnetische Felder positiv beeinflußt werden.

Eine weitere, bevorzugte Möglichkeit zur Beschichtung von Objekten mit pulverförmigen Stoffen ist das Flammspritzverfahren. Bei diesem Verfahren wird das Pulver mit einem Trägergas (z. B. in einem Wirbelbett) fluidisiert und der zentralen Düse einer Flammspritzpistole zugeführt. Gleichzeitig wird in der Flammspritzpistole ein Brenngas/Sauerstoffgemisch erzeugt, welches in vielen kleinen um das Zentrum herum ringförmig angeordneten Flämmchen verbrannt wird. Dabei schmelzen die pulverförmigen Teilchen auf und werden anschließend auf dem zu beschichtenden Objekt als Tröpfchen abgeschieden, die im Verlauf des Spritzprozesses zu einem Film zusammenfließen. Dieses Verfahren bietet den besonderen Vorteil, daß der Schmelzvorgang in den Versprühprozess integriert ist, so daß in einem Arbeitsschritt der Auftrag der Beschichtung auf den Gegenstand und die Filmbildung erfolgen kann.

Eine weitere bevorzugte Ausführungsform zur Pulverbeschichtung ist das Wirbelsinterverfahren. Hierzu wird in einem geeigneten Behälter mit Hilfe eines Trägergases und der erfindungsgemäßen Farbmittelzusammensetzung eine Wirbelschicht erzeugt. Das zu beschichtende Objekt wird in einer separaten Wärmekammer auf die für die Beschichtung notwendige Temperatur erhitzt, und nach Erreichen dieser Temperatur wird es für eine bestimmte Zeit in die Wirbelschicht eingetaucht. Dabei bleiben pulverförmige Teilchen an der Objektoberfläche haften, schmelzen auf, fließen zu einem Film zusammen und bilden die helikale Struktur aus. In manchen Fällen ist es vorteilhaft, das beschichtete Objekt einer weiteren Temperaturbehandlung zu unterziehen, um die Filmbildung und die Orientierung der Polymermoleküle zu verbessern. In anderen Fällen läßt man das Objekt an der Luft abkühlen oder schreckt es mit Wasser ab. Auch dieses Verfahren bietet den besonderen Vorteil, daß der Schmelzvorgang in den Beschichtungsprozess integriert ist, so daß in einem Arbeitsschritt der Auftrag der Beschichtung auf den Gegenstand, die Orientierung der Polymermoleküle und die Filmbildung erfolgen kann.

Bei allen beschriebenen Pulverbeschichtungsverfahren und insbesondere beim Wirbelsinter- und Flammspritzverfahren ist die Teilchenform und damit die Rieselfähigkeit des Pulvers sowie die Korngrößenverteilung des Pulvers von großer Bedeutung. Bevorzugt sind Teilchen, die der Kugelform möglichst nahe kommen und die eine enge Korngrößenverteilung aufweisen. Kugelförmige Teilchen werden auf einfache Weise bei Prozessen erhalten, bei welchen die Polymerisation in einer emulgierten oder dispergierten Phase durchgeführt wird. Bei den Mahlprozessen werden je nach eingesetztem Mühlentyp engere oder breitere Korngrößenverteilungen erhalten. In einigen Fällen ist es vorteilhaft, einen Sieb-, Klassifizier- oder Sichtungsprozess an die Mahlung anzuschließen, um eine möglichst enge Korngrößenverteilung zu erreichen. In anderen Fällen ist es vorteilhaft, zuerst ein sehr feinteiliges Pulver herzustellen, welches dann gezielt zu der gewünschten Teilchengröße agglomeriert werden kann.

Die gewünschte Kornfeinheit ist ausschlaggebend für die Schichtdicke der Pulvereffektbeschichtung, die Art des zu beschichtenden Objekts und das angewandte Applikationsverfahren. Werden auf dem zu beschichtenden Objekt dünne Lackschichten gewünscht, so ist eine mittlere Teilchengröße des Pulvers zwischen 1 und 100 µm, vorzugsweise zwischen 15 und 80 µm, anzustreben. Werden dicke Schichten auf dem Objekt gewünscht, wie sie normalerweise beim Wirbelsintern und Flammspritzen appliziert werden, so ist eine mittlere Teilchengröße zwischen 80 und 300 µm, vorzugsweise 100 bis 250 µm, vorteilhaft. Beim Wirbelsintern und Flammspritzen ist auf die Einhaltung der Korngrößengrenzen besonders zu achten. Zu kleine Teilchen werden durch die hohen Flammtemperaturen zu stark erhitzt und verkohlen oder werden durch den Gasstrom weggeblasen. Zu grobe Teilchen werden dagegen nicht vollständig aufgeschmolzen und können sich bei der anschließenden Filmbildung nicht optimal orientieren. In Ausnahmefällen kann es jedoch auch vorteilhaft sein, eine außerhalb dieses Bereichs liegende Korngrößenverteilung zu verwenden.

Pulvereffektbeschichtungen können auf die unterschiedlichsten Substrate aufgebracht werden. Dies können beispielsweise Gegenstände aus natürlichen und synthetischen Materialien wie beispielsweise Holz, Kunststoffe, Metall oder Glas sein. Wird die Effektbeschichtung ohne eine Vorbeschichtung aufgebracht, so empfiehlt sich ein Auftrag in einer Schichtdicke, die den Untergrund abdeckt. Es können selbstverständlich auch mehrere Schichten aufgetragen oder semitransparente Beschichtungen hergestellt werden. Besonders bevorzugt ist die Beschichtung der Karosserie oder von Karosserieteilen von Kraftfahrzeugen.

In bevorzugten Fällen wird die Pulvereffektbeschichtung auf Metall- oder Kunststoffuntergründe aufgebracht. Diese sind meistens vorbeschichtet. Das heißt, Kunststoffsubstrate können mit einer Kunststoffgrundierung versehen sein, und metallische Substrate besitzen im allgemeinen eine elektrophoretisch aufgebrachte Grundierung und gegebenenfalls eine oder mehrere weitere Lackschichten wie beispielsweise eine Füllerschicht.

Besonders bevorzugt sind dunkle Untergründe. Unter dunklem Untergrund ist in diesem Zusammenhang nicht nur ein an seiner Oberfläche mit einer dunklen Lackschicht versehenes Substrat zu verstehen, sondern auch ein in sich dunkel gefärbtes Substrat, beispielsweise ein Kunststoffsubstrat oder ein mit einer dunklen Oxidschicht überzogenes Metallsubstrat. Beispiele für dunkle Lackschichten sind elektrophoretisch oder durch Spritz- oder Pulverlackierung aufgebrachte Grundierungen, Kunststoffgrundierungen, Füller- und Steinschlagschutzschichten oder auch unifarbene Basis- und Decklackschichten. Beispiele für dunkle Untergründe sind dunkelrot, dunkelblau, dunkelgrün, dunkelbraun, dunkelgrau und insbesondere schwarz. Pulverbeschichtungen können auch auf hellen Untergründen oder in deckenden Schichten appliziert werden. Dabei kommt jedoch der vom Betrachtungswinkel abhängige Farbeindruck nur abgeschwächt zum Ausdruck.

Pulvereffektbeschichtungen können nach üblichen Methoden mit einem Klarlack überzogen werden. Als Klarlack sind grundsätzlich alle bekannten Klarlacke oder transparent pigmentierten Überzugsmittel geeignet. Hierbei können sowohl lösungsmittelhaltige Einkomponenten- oder Zweikomponenten-Lacke sowie vorzugsweise wasserverdünnbare Klarlacke und insbesondere Pulverlacke eingesetzt werden. In manchen Fällen kann es zweckmäßig sein, die Klarlackschicht etwas dicker zu wählen oder 2 Klarlackschichten aus gleichen oder verschiedenen Flüssigklarlacken oder Pulverklarlacken aufzutragen. Der Klarlack enthält bekannterweise weitere Hilfsstoffe, die die Oberflächeneigenschaften der beschichteten Objekte verbessern. Zu erwähnen sind beispielsweise UV-Stabilisatoren und Lichtschutzmittel, die die darunterliegenden Schichten vor Abbaureaktionen schützen.

Eine weitere Möglichkeit, erfindungsgemäße Farbmittelzusammensetzungen in Effektbeschichtungen zu überführen, ist die Schmelzbeschichtung. Hierbei wird die Farbmittelzusammensetzung als Schmelze auf das Substrat aufgezogen oder auf dem Substrat aufgeschmolzen und zu einer dünnen Schicht verarbeitet. Zum Aufbringen der Polymerschmelze eignet sich beispielsweise ein beheizbarer Rakel. Der Auftrag kann aber auch mit einfacheren Mitteln, wie beispielsweise einem Spachtel, erfolgen.

Die erfindungsgemäßen Beschichtungen zeichnen sich durch einfache Applikationsverfahren und durch interessante, vom Betrachtungswinkel abhängige coloristische Effekte aus, die durch Absorptionspigmente allein und/oder cLCP-Effektbeschichtungen nicht zu erzielen sind.

In den nachfolgenden Beispielen bedeuten Teile Gewichtsteile. Beispiele zur Herstellung der cholesterischen Flüssigkristallpolymeren:

### Beispiel A:

28218 Teile 2-Hydroxy-6-naphthoesäure, 34530 Teile 4-Hydroxy-benzoesäure, 8307 Teile Terephthalsäure, 1862 Teile 4,4'-Dihydroxybiphenyl und 5846 Teile 1,4:3,6-Dianhydro-D-sorbit (Isosorbid) werden in einem Reaktor mit 52680 Teilen Essigsäureanhydrid versetzt und mit einem leichten Stickstoffstrom durchspült. Die Mischung wird unter Rühren innerhalb von 15 Minuten auf 140°C erhitzt und diese Temperatur für 30 Minuten gehalten. Danach wird die Temperatur innerhalb von 165 Minuten auf 325°C erhöht und die Schmelze 30 Minuten bei dieser Temperatur weiter gerührt. Ab ca. 220°C beginnt Essigsäure abzudestillieren. Danach wird die Stickstoffspülung abgebrochen und langsam Vakuum angelegt. Die Schmelze wird für weitere 30 Minuten unter Vakuum (ca. 5 mbar) gerührt. Danach wird mit Stickstoff belüftet und das Polymer mit einem Extruder ausgetragen und pelletiert. Das Polymer hat eine brillante, grünstichig gelbe Farbe, die bei schrägem Anblick blaustichig grün erscheint. Die Farbe tritt schon während der Kondensation im Vakuum auf und bleibt nach dem Abkühlen erhalten.

### Beispiel B:

28218 Teile 2-Hydroxy-6-naphthoesäure, 34530 Teile 4-Hydroxy-benzoesäure, 8307 Teile Terephthalsäure, 3491 Teile 4,4'-Dihydroxybiphenyl und 4795 Teile 1,4:3,6-Dianhydro-D-sorbit (Isosorbid) werden in einem Reaktor mit 52680 Teilen Essigsäureanhydrid versetzt und mit einem leichten Stickstoffstrom durchspült. Die Mischung wird unter Rühren innerhalb von 15 Minuten auf 140°C erhitzt und diese Temperatur für 30 Minuten gehalten. Danach wird die Temperatur innerhalb von 165 Minuten auf 325°C erhöht und die Schmelze 30 Minuten bei dieser Temperatur weiter gerührt. Ab ca. 220°C beginnt Essigsäure abzudestillieren. Danach wird die Stickstoffspülung abgebrochen und langsam Vakuum angelegt. Die Schmelze wird für weitere 30 Minuten unter Vakuum (ca. 5 mbar) gerührt. Danach wird mit Stickstoff belüftet und das Polymer mit einem Extruder ausgetragen und pelletiert. Das Polymer hat eine brillante, goldgelbe Farbe, die bei schrägem Anblick grün erscheint. Die Farbe tritt schon während der Kondensation im Vakuum auf und bleibt nach dem Abkühlen erhalten.

### Beispiel C:

28218 Teile 2-Hydroxy-6-naphthoesäure, 34530 Teile 4-Hydroxy-benzoesäure, 8307 Teile Terephthalsäure, 2793 Teile 4,4'-Dihydroxybiphenyl und 5115 Teile 1,4:3,6-Dianhydro-D-sorbit (Isosorbid) werden in einem Reaktor mit 52680 Teilen Essigsäureanhydrid versetzt und mit einem leichten Stickstoffstrom durchspült. Die Mischung wird unter Rühren innerhalb von 15 Minuten auf 140°C erhitzt und diese Temperatur für 30 Minuten gehalten. Danach wird die Temperatur innerhalb von 165 Minuten auf 325°C erhöht und die Schmelze 30 Minuten bei dieser Temperatur weiter gerührt. Ab ca. 220°C beginnt Essigsäure abzudestillieren. Danach wird die Stickstoffspülung abgebrochen und langsam Vakuum angelegt. Die Schmelze wird für weitere 30 Minuten unter Vakuum (ca. 5 mbar) gerührt. Danach wird mit Stickstoff belüftet und das Polymer mit einem Extruder ausgetragen und pelletiert. Das Polymer hat eine brillante, kupfrig orange Farbe, die bei schrägem Anblick rotstichig gelb erscheint. Die Farbe tritt schon während der Kondensation im Vakuum auf und bleibt nach dem Abkühlen erhalten.

### Beispiele zur Herstellung der erfindungsgemäß eingefärbten cholesterischen Flüssigkristallpolymeren

### Beispiel 1:

288 Teile nach Beispiel A hergestelltes cholesterisches Flüssigkristallpolymer werden mit 18 Teilen C.I. Pigment Yellow 180 gemischt und anschließend im ®Rheomex-Einschneckenextruder (Firma Haake; Schneckendurchmesser 19 mm; Länge L/D =25:1; Schnecke mit Mischzone) extrudiert. Die Einzugszone wird auf 240°C und die folgenden Zonen auf 275°C geheizt. Die plastische Masse wird in einem Strang abgezogen und zu einem Granulat geschnitten. Die erhaltene Farbmittelzusammensetzung hat eine brillante gelbe Farbe, die bei schrägem Anblick gelbstichig grün erscheint.

### Beispiel 2:

Beispiel 1 wird wiederholt, jedoch werden anstelle von C.I. Pigment Yellow 180 18 Teile C.I. Pigment Green 7 eingesetzt.

Die erhaltene Farbmittelzusammensetzung hat eine brillante, grünstichig gelbe Farbe, die bei schrägem Anblick grün erscheint.

### Beispiel 3:

288 Teile nach Beispiel B hergestelltes cholesterisches Flüssigkristallpolymer werden mit 18 Teilen C.I. Pigment Blue 15:1 gemischt und anschließend im ®Rheomex-Einschneckenextruder (Firma Haake; Schneckendurchmesser 19 mm; Länge L/D =25:1; Schnecke mit Mischzone) extrudiert. Die Einzugszone wird auf 240°C und die folgenden Zonen auf 275°C geheizt. Die plastische Masse wird in einem Strang abgezogen und zu einem Granulat geschnitten. Die erhaltene Farbmittelzusammensetzung hat eine brillante rotstichig gelbe Farbe, die bei schrägem Anblick grün bis grünstichig blau erscheint.

### Beispiel 4:

292,5 Teile nach Beispiel C hergestelltes cholesterisches Flüssigkristallpolymer werden mit 7,5 Teilen C.I. Pigment Red 149 gemischt und anschließend im ®Rheomex-Einschneckenextruder (Firma Haake; Schneckendurchmesser 19 mm; Länge L/D =25:1; Schnecke mit Mischzone) extrudiert. Die Einzugszone wird auf 240°C und die folgenden Zonen auf 275°C geheizt. Die plastische Masse wird in einem Strang abgezogen und zu einem Granulat geschnitten. Die erhaltene Farbmittelzusammensetzung hat eine brillante kupfrig rote Farbe, die bei schrägem Anblick orange erscheint.

### Beispiel 5:

295,5 Teile nach Beispiel A hergestelltes cholesterisches Flüssigkristallpolymer werden mit 4,5 Teilen C.I. Solvent Blue 122 gemischt und anschließend im ®Rheomex-Einschneckenextruder (Firma Haake; Schneckendurchmesser 19 mm; Länge L/D =25:1; Schnecke mit Mischzone) extrudiert. Die Einzugszone wird auf 240°C und die folgenden Zonen auf 275°C geheizt. Die plastische Masse wird in einem Strang abgezogen und zu einem Granulat geschnitten. Die erhaltene Farbmittelzusammensetzung hat eine brillante, grünstichig gelbe Farbe, die bei schrägem Anblick je nach Blickwinkel grün bis blau erscheint.

### Beispiel 6:

295,5 Teile nach Beispiel C hergestelltes cholesterisches Flüssigkristallpolymer werden mit 4,5 Teilen C.I. Disperse Yellow 94 gemischt und anschließend im ®Rheomex-Einschneckenextruder (Firma Haake; Schneckendurchmesser 19 mm; Länge L/D =25:1; Schnecke mit Mischzone) extrudiert. Die Einzugszone wird auf 240°C und die folgenden Zonen auf 275°C geheizt. Die plastische Masse wird in einem Strang abgezogen und zu einem Granulat geschnitten. Die erhaltene Farbmittelzusammensetzung hat eine brillante, gelbstichig orange Farbe, die bei schrägem Anblick gelb erscheint.

### Beispiel 7:

Beispiel 6 wird wiederholt, wobei jedoch anstelle von C.I. Disperse Yellow 94 4,5 Teile eines polymerlöslichen roten Farbstoffes mit folgender Konstitution ingesetzt werden

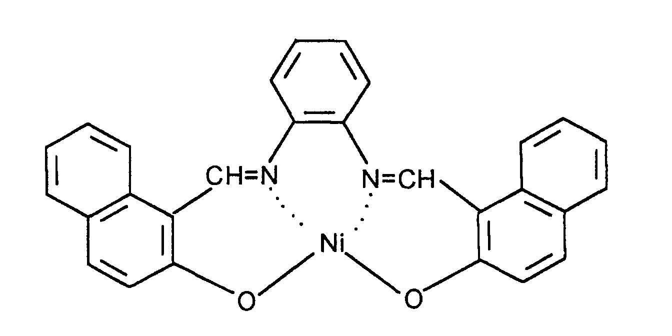

Die erhaltene Farbmittelzusammensetzung hat eine brillante, kupfrig rote Farbe, die bei schrägem Anblick gelbstichig braun erscheint.

## Patentansprüche

1. Farbmittelzusammensetzung, bestehend aus 0,01 bis 60 Gew.-% eines Farbmittels aus der Gruppe der Anthanthron-, Anthrachinon-, Dioxazin-, Phthalocyanin-, Chinacridon-, Diketopyrrolopyrrol-, Perylen-, Perinon-, Azomethin-, Isoindolin- und Azo-Pigmente, der Chinophthalon-, Perinon-, Anthrachinon-, Azomethinkomplex-, Azlacton- und Azo-Farbstoffen;
40 bis 99,99 Gew.-% eines cholesterischen flüssigkristallinen Hauptkettenpolymers, bestehend aus 0 bis 99,8 Mol% einer oder mehrerer Verbindungen aus der Gruppe der aromatischen Hydroxycarbonsäuren, cycloaliphatischen Hydroxycarbonsäuren und aromatischen Aminocarbonsäuren;
0 bis 50 Mol% einer oder mehrerer Verbindungen aus der Gruppe der aromatischen Dicarbonsäuren und cycloaliphatischen Dicarbonsäuren;
0 bis 50 Mol% einer oder mehrerer Verbindungen aus der Gruppe der aromatischen und cycloaliphatischen Diole und Diamine; und 0,1 bis 40 Mol%, an chiralen, bifunktionellen Comonomeren; wobei die Summe 100 Mol% ergibt; und
0 bis 10 Gew.-% an üblichen Hilfsstoffen und Additiven.

2. Farbmittelzusammensetzung nach Anspruch 1, **dadurch gekennzeichnet, daß** das Hauptkettenpolymer eine oder mehrere Verbindungen aus der Gruppe p-Hydroxybenzoesäure, 2-Hydroxy-6-naphthoesäure, Terephthalsäure, Isophthalsäure, 2,6-Naphthalindicarbonsäure, Hydrochinon, Resorcin und 4,4'-Dihydroxybiphenyl enthält.

3. Farbmittelzusammensetzung nach Anspruch 1 oder 2, **dadurch gekennzeichnet, daß** ein chirales, bifunktionelles Comonomer aus der Gruppe Isosorbid, Isomannid, Isoidid, Camphersäure, (D)- oder (L)-Methylpiperazin, (D)- oder (L)-3-Methyladipinsäure, Butan-2,3-diol, 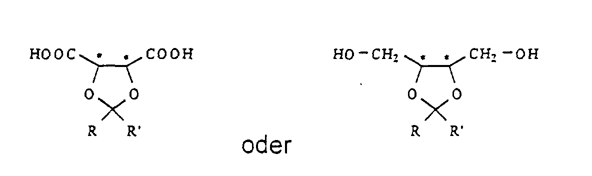 wobei R und R' jeweils unabhängig voneinander H, C₁-C₆-Alkyl oder Phenyl, vorzugsweise H oder CH₃, sind, oder eine Kombination davon enthalten ist.

4. Verfahren zur Herstellung einer Farbmittelzusammensetzung nach mindestens einem der Ansprüche 1 bis 3, indem man eine Schmelze des cholesterischen flüssigkristallinen Polymers mit dem Farbmittel und gegebenenfalls den Hilfsstoffen und Additiven vermischt, bis eine homogene Verteilung vorliegt, oder indem man das Farbmittel und gegebenenfalls die Hilfsstoffe und Additive während der Polykondensation des Polymers zugibt.

5. Verfahren nach Anspruch 4, **dadurch gekennzeichnet, daß** das Vermischen durch Extrusion erfolgt.

6. Verwendung einer Farbmittelzusammensetzung nach mindestens einem der Ansprüche 1 bis 3 als Werkstoff oder als Ausgangsmaterial zur Herstellung von Effektpigmenten oder Effektbeschichtungen.

## Claims

1. A colorant composition comprising from 0.01 to 60% by weight of a colorant from the group consisting of the anthanthrone, anthraquinone, dioxazine, phthalocyanine, quinacridone, diketopyrrolopyrrole, perylene, perinone, azomethine, isoindoline and azo pigments and the quinophthalone, perinone, anthraquinone, azomethine complex, azlactone and azo dyes;
from 40 to 99.99% by weight of a cholesteric liquid-crystalline main-chain polymer comprising from 0 to 99.8 mol% of one or more compounds from the group consisting of aromatic hydroxycarboxylic acids, cycloaliphatic hydroxycarboxylic acids and aromatic aminocarboxylic acids;
from 0 to 50 mol% of one or more compounds from the group consisting of aromatic dicarboxylic acids and cycloaliphatic dicarboxylic acids;
from 0 to 50 mol% of one or more compounds from the group consisting of aromatic and cycloaliphatic diols and diamines; and from 0.1 to 40 mol% of chiral, bifunctional comonomers; the sum of which is 100 mol%; and
from 0 to 10% by weight of customary auxiliaries and additives.

2. The colorant composition as claimed in claim 1, wherein the main-chain polymer comprises one or more compounds from the group consisting of p-hydroxybenzoic acid, 2-hydroxy-6-naphthoic acid, terephthalic acid, isophthalic acid, 2,6-naphthalenedicarboxylic acid, hydroquinone, resorcinol and 4,4'-dihydroxybiphenyl.

3. The colorant composition as claimed in claim 1 or 2, wherein a chiral, bifunctional comonomer from the group consisting of isosorbide, isomannide, isoidide, camphoric acid, (D)- or (L)-methylpiperizine, (D)- or (L)-3-methyladipic acid, butane-2,3-diol, 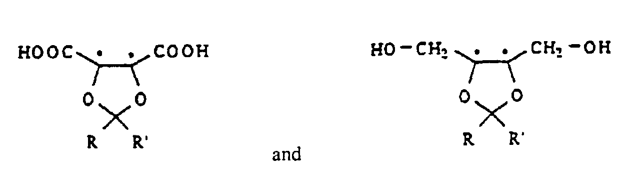 in which R and R' are each independently of one another H, C₁-C₆-alkyl or phenyl, preferably H or CH₃, or a combination thereof is present.

4. A process for preparing a colorant composition as claimed in at least one of claims 1 to 3 by mixing a melt of the cholesteric liquid-crystalline polymer with the colorant and, if desired, with the auxiliaries and additives until there is homogeneous distribution, or by adding the colorant and, if desired, the auxiliaries and additives during the polycondensation of the polymer.

5. The process as claimed in claim 4, wherein mixing is carried out by extrusion.

6. The use of a colorant composition as claimed in at least one of claims 1 to 3 as a material of construction or as a starting material for producing effect pigments or effect coatings.

## Revendications

1. Composition de colorant contenant de 0,01 à 60 % en masse d'un colorant pris dans le groupe des pigments d'anthanthrone, d'anthraquinone, de dioxazine, de phtalocyanine, de quinacridone, de dicétopyrrolopyrrole, de pérylène, de périnone, d'azométhine, d'isoindoline et de pigments azoïques, des colorants de quinophtalone, de périnone, d'anthraquinone, de complexes d'azométhine, d'azlactone et azoïques ;
de 40 à 99,99 % en masse d'un polymère de cristaux liquides cholestériques inclus dans la chaîne principale constitué par 0 à 99,8 % molaires d'un ou plusieurs composés pris dans le groupe des acides hydroxycarboxyliques aromatiques, des acides hydroxycarboxyliques cycloaliphatiques et des acides aminocarboxyliques aromatiques ;
de 0 à 50 % molaires d'un ou plusieurs composés pris dans le groupe des acides dicarboxyliques aromatiques et des acides dicarboxyliques cycloaliphatiques ;
de 0 à 50 % molaires d'un ou plusieurs composés pris dans le groupe des diols et diamines aromatiques et cycloaliphatiques ; et
de 0,1 à 40 % molaires de comonomères bifonctionnels chiraux ;
la somme donnant 100 % molaires ; et
de 0 à 10 % en masse d'adjuvants et d'additifs usuels.

2. Composition de colorant selon la revendication 1, **caractérisée en ce que** le polymère de chaîne principale contient un ou plusieurs composés pris parmi l'acide p-hydroxybenzoïque, l'acide 2-hydroxy-6-naphtoïque, l'acide téréphtalique, l'acide isophtalique, l'acide 2,6-naphtalènedicarboxylique, l'hydroquinone, la résorcine et le 4,4'-dihydroxy-biphényle.

3. Composition de colorant selon la revendication 1 ou 2, **caractérisée en ce qu'**elle contient un comonomère bifonctionnel chiral pris parmi l'isosorbide, l'isomannide, l'isoidide, l'acide camphrique, la (D)- ou (L)-méthylpipérazine, l'acide (D) ou (L)-3-méthyladipique, le butane-2,3-diol 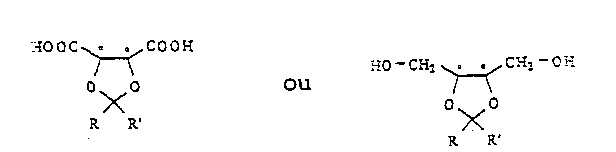 où R et R' représentent chacun, indépendamment l'un de l'autre, un atome d'hydrogène, des groupes alkyle en C₁-C₆ ou phényle, de préférence un atome d'hydrogène ou un groupe CH₃, ou une combinaison de ces composés.

4. Procédé pour la préparation d'une composition de colorant selon au moins l'une des revendications 1 à 3, dans lequel on mélange une matière fondue du polymère à cristaux liquides cholestériques avec le colorant et éventuellement des adjuvants et additifs et éventuellement on ajoute les adjuvants et les additifs au cours de la polycondensation du polymère.

5. Procédé selon la revendication 4, **caractérisé en ce qu'**on réalise le mélange par extrusion.

6. Utilisation d'une composition de colorant selon au moins l'une des revendications 1 à 3 en tant que matériau ou matière de départ pour la préparation de pigments à effet ou de revêtements à effet.
